**Europäisches Patentamt**

**European Patent Office**

**Office européen des brevets**

(11) Numéro de publication : **0 509 899 A1**

## (12) DEMANDE DE BREVET EUROPEEN

(21) Numéro de dépôt : **92401036.6**

(22) Date de dépôt : **14.04.92**

(51) Int. Cl.⁵ : **F16L 37/10, F16L 33/23**

(30) Priorité : **15.04.91 FR 9104579**

(43) Date de publication de la demande :
**21.10.92 Bulletin 92/43**

(84) Etats contractants désignés :
**BE ES IT PT**

(71) Demandeur : **HUTCHINSON S.A.**
**2 rue Balzac**
**F-75008 Paris (FR)**

(72) Inventeur : **Blin, Philippe**
**La Marquinière**
**F-37260 Monts (FR)**
Inventeur : **Ladouce, Jacques**
**La Girardière**
**F-37240 La Chapelle Blanche (FR)**
Inventeur : **Mahin, Daniel**
**Les Chesnais**
**F-37510 Savonnieres (FR)**

(74) Mandataire : **Doireau, Marc et al**
**Cabinet Orès 6, avenue de Messine**
**F-75008 Paris (FR)**

(54) **Dispositif pour raccorder une extrémité d'un tube en caoutchouc sur un embout.**

(57) Selon l'Invention, le dispositif de raccordement d'une extrémité (1a) d'un tube (1) en caoutchouc sur un embout annelé (2) comprend un raccord (10) avec une pièce de liaison (11) ayant un élément tubulaire (12) emmanché dans le tube (1) et une douille (13) dans laquelle est logé un joint d'étanchéité annulaire (20), et une bague de blocage (25) rapportée autour de la douille (13) et ayant au moins un doigt interne (28) destiné à exercer une compression radialement interne sur au moins une languette (15) de la douille (13) pour l'appliquer sur l'embout (2) et immobiliser axialement le raccord (10) sur l'embout (2) après rotation de la bague (25).

FIG. 1 b

La présente Invention concerne un dispositif pour raccorder une extrémité d'un tube en caoutchouc sur un embout, du type comprenant une pièce de liaison formée d'un élément tubulaire destiné à être fixé, par une extrémité, à l'extrémité du tube et d'une douille située dans le prolongement axial de l'autre extrémité de l'élément tubulaire et dans laquelle est logé un joint d'étanchéité annulaire, et une bague de blocage mobile en rotation qui est rapportée autour de la douille pour exercer une force de compression radialement interne sur une partie élastiquement déformable de la douille.

D'une manière générale, il est courant d'utiliser dans de nombreuses applications industrielles des tubes en caoutchouc pour véhiculer un agent pneumatique ou fluidique entre une source d'alimentation et un appareil d'utilisation par exemple. Pour certaines applications, il peut suffire d'emmancher à force l'extrémité du tube côté source et/ou côté appareil sur un embout pour réaliser un raccordement étanche avec une tenue mécanique suffisante.

Ce type de raccordement est d'ailleurs celui qui est notamment utilisé en électroménager pour raccorder une cuisinière à un robinet distributeur de gaz de ville ou à un détendeur d'une bouteille de gaz, selon les normes en vigueur. Plus précisément, les embouts alors dénommés abouts sont métalliques et annelés selon la norme NF-D-36 109 pour le gaz butane et la norme NF-D-36 111 pour le gaz de ville, alors que les tubes en caoutchouc dénommés tubes gaz ont une constitution qui doit satisfaire la norme NF-D-36 101 pour le gaz butane et la norme NF-D-36 102 pour le gaz de ville. D'une manière générale, un tube gaz est constitué d'un tube en caoutchouc qui doit résister, côté intérieur, à l'action physico-chimique de l'agent véhiculé et, côté extérieur, aux contraintes de l'environnement ambiant.

Le GAZ DE FRANCE analyse scrupuleusement tous les accidents occasionnés par le gaz pour tenter d'y remédier. Concrètement, ces accidents sont heureusement peu nombreux, mais il s'avère que ceux qui surviennent au niveau des canalisations de distribution du gaz, en amont des compteurs individuels ou collectifs, sont en diminution constante, alors que ceux qui surviennent en aval de ces compteurs restent sensiblement constants. Or, pour ces derniers accidents, il s'avère également que ce ne sont pas les tubes gaz qui sont spécialement incriminés, dès l'instant où les usagers prennent toutefois la précaution de les changer périodiquement (avant la fin de la cinquième année d'utilisation selon la norme), mais les raccordements du tube gaz sur l'about de la cuisinière d'une part et sur l'about de robinet mural de distribution de gaz d'autre part, sachant que ces abouts métalliques ne sont pratiquement jamais changés.

Les opérations de raccordement d'un tube gaz sur ces abouts s'effectuent directement par emmanchement à force et elles sont concrètement effectuées par les usagers eux-mêmes. Un premier facteur d'accidents résulte des trois diamètres normalisés des tubes gaz, à savoir 12, 15 et 20 mm pour l'application de gaz de ville. En effet, une erreur due à l'achat précipité par exemple d'un tube gaz non adapté au diamètre des abouts entraînera nécessairement un raccordement défectueux, car l'usager cherchera par tous les moyens à réaliser le raccordement. Par contre, ce risque d'erreur n'existe pas pour l'application gaz en bouteille, car le diamètre du tube gaz est normalisé à 6 mm. Un second facteur d'accidents résulte du mode de raccordement qui se fait par emmanchement à force, aussi bien pour les applications gaz de ville que gaz en bouteille. En effet, un tel emmanchement peut s'avérer insuffisant, notamment lorsqu'il est réalisé par une personne âgée, et le moindre effort de traction exercé sur le tube pourra occasionner une fuite de gaz.

Pour pallier ces risques d'accidents, le GAZ DE FRANCE a essayé de préconiser le remplacement des tubes gaz par des flexibles présentant des embouts sertis qui viennent se monter sur des pas de vis côté robinet de distribution du gaz et côté cuisinière, mais cela nécessite le démontage préalable des abouts qui deviennent inutiles. De tels flexibles correspondent à la norme NF-D-36 103. Cependant, cette tentative s'est soldée par un échec au niveau des consommateurs, en premier lieu à cause du prix de ces flexibles de l'ordre de 130,00 FF, alors que le tube gaz classique ne coûte qu'environ 20,00 FF, et en second lieu par la nécessité qu'il y a pour les usagers de démonter les abouts.

Une seconde tentative plus récente a été faite par le GAZ DE FRANCE en essayant de préconiser des tuyaux entièrement métalliques selon la norme NF-D-36 121, mais là encore il y a eu échec au niveau des consommateurs, un tel tuyau métallique étant d'un coût élevé de l'ordre de 500,00 FF.

Le but de l'Invention est de concevoir un dispositif de raccordement utilisant un tube gaz classique en caoutchouc qui soit capable de pallier les inconvénients précités tout en procurant d'autres avantages.

A cet effet, l'Invention propose un dispositif de raccordement du type précité, caractérisé en ce que la partie élastiquement déformable de la douille est située vers l'extrémité libre de celle-ci, et elle est formée par au moins une languette radiale de serrage arquée qui s'étend sur un arc de circonférence de la douille, et en ce que la bague de blocage comporte au moins un doigt radialement interne pour appliquer la languette sur l'embout au cours de la rotation de ladite bague.

D'une manière générale, l'engagement de l'embout à l'intérieur de la douille entraîne une déformation du joint d'étanchéité qui se trouve comprimé entre l'embout et la douille, sachant que le joint et la douille sont dimensionnés de manière à pouvoir recevoir des embouts de diamètre différent sans nuire à l'étanchéité et à la tenue mécanique.

Ainsi, selon un avantage important de l'Invention, un même système de raccordement peut être monté indifféremment sur des embouts de 12, 15 et 20 mm, ce qui permet d'éviter les risques d'accidents provoqués auparavant par l'achat d'un flexible non adapté au diamètre de l'embout sur lequel il devait être raccordé.

Selon un mode de réalisation de l'Invention, la partie élastiquement déformable de la douille est située vers l'extrémité libre de celle-ci et est formée de quatre languettes de serrage arquées réparties sur la circonférence de la douille et qui s'étendent chacune sur un arc de cette circonférence, et la bague de blocage présente quatre doigts internes arqués également répartis sur une circonférence de la bague, chaque doigt étant associé à une languette pour presser celle-ci sur l'embout lors de la rotation de la bague de blocage et assurer l'immobilisation axiale du raccord.

Toujours selon ce mode de réalisation, le joint d'étanchéité s'étend sur une longueur correspondant sensiblement à la distance séparant les doigts internes de la douille et le fond de celle-ci pour que les languettes viennent directement en contact avec l'embout.

Un tel dispositif de raccordement est avantageusement préassemblé à chaque extrémité d'un tube de gaz pour former un ensemble dénommé flexible prêt à la commercialisation. Ainsi, pour l'usager, l'opération de raccordement du flexible sur un embout se limite à engager la douille sur l'extrémité libre annelée de l'about, ce qui entraîne une compression radiale du joint d'étanchéité coincé entre l'embout et la douille, et à agir ensuite sur la bague de blocage par rotation pour immobiliser axialement le raccord par suite de la pression exercée par les doigts de la bague sur les languettes de la douille en appui sur l'embout.

Un tel dispositif de raccordement est donc du type raccord à montage et démontage rapide sans qu'il soit nécessaire de recourir à un outil.

En outre, un tel dispositif présente les avantages d'être auto-obturant, de ne nécessiter aucun effort particulier pour son montage et d'avoir une tenue mécanique suffisante qui lui permet de résister à des forces de traction de l'ordre de 80 kilos environ pour le gaz de ville.

D'autres avantages, caractéristiques et détails de l'Invention ressortiront de la description explicative qui va suivre faite en référence au dessin annexé, donné uniquement à titre d'exemple et dans lequel :

- les figures 1a et 1b sont des vues en coupe longitudinale d'un système de raccordement conforme à l'Invention avant et après montage sur un embout par exemple annelé, respectivement,

- la figure 2 est une vue en perspective de la pièce de liaison du dispositif de raccordement,

- et la figure 3 est une vue en bout de la bague de blocage du système de raccordement, avec en réalité deux demi-vues 3a et 3b montrant la bague avant et après blocage, respectivement.

Le dispositif de raccordement selon l'Invention et tel qu'illustré sur les figures permet de raccorder une extrémité 1a d'un tube 1 sur un embout annelé 2 dont la représentation a été limitée à son extrémité libre formée par une partie cylindrique 3a dont la surface périphérique externe se termine par deux bossages annulaires consécutifs 4 et 5 formant une ondulation dans le sens axial.

Le dispositif de raccordement est constitué par un raccord 10 qui présente une pièce de liaison 11 formée d'un élément tubulaire 12 prolongé axialement à une extrémité par une douille 13 de plus grand diamètre et délimitant entre eux un épaulement annulaire interne 14.

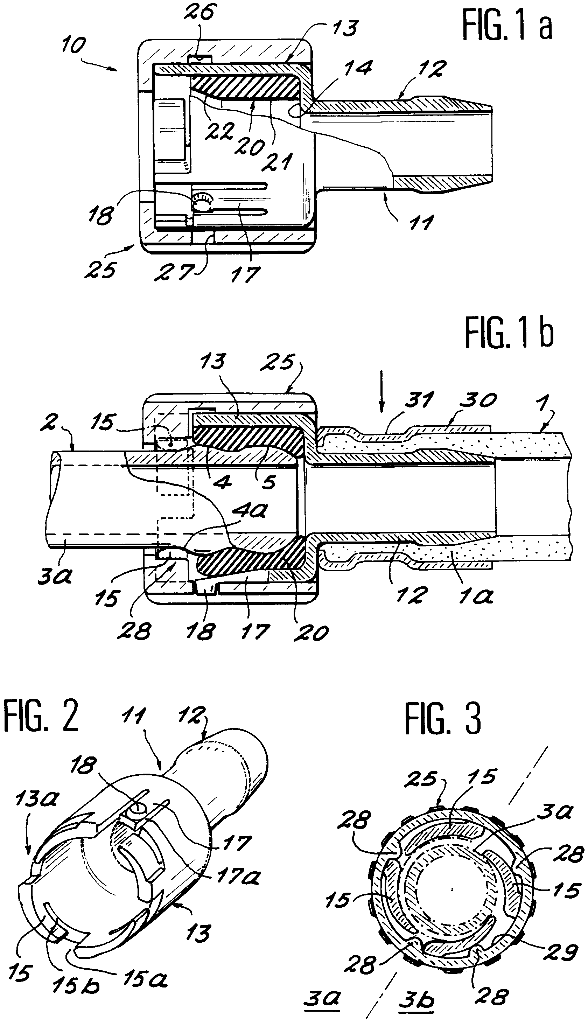

La douille 13, comme visible à la figure 2, présente une partie 13a élastiquement déformable formant pince et destinée à venir au contact de l'embout 2 pour immobiliser axialement le raccord 10.

Dans l'exemple considéré ici, la partie 13a élastiquement déformable est située vers l'extrémité libre de la douille 13 et se présente sous la forme de quatre languettes de serrage arquées 15 réparties sur la circonférence de la douille 13 et qui s'étendent chacune sur un arc de cercle de cette circonférence. Chaque languette 15 est globalement délimitée par deux encoches 15a et 15b. L'encoche 15a s'étend longitudinalement sur une longueur correspondant à la largeur de la languette 15, et elle se prolonge à 90° par l'encoche 15b qui s'étend sur un arc de cercle correspondant à celui de la languette 15.

La douille 13 présente également au moins une patte longitudinale 17 située entre deux doigts 15 et qui est délimitée entre deux encoches longitudinales 17a. A son extrémité libre, adjacente aux doigts 15, la patte 17 présente un bossage radial externe 18.

Un joint d'étanchéité annulaire 20 vient se loger à l'intérieur de la douille 13 entre l'épaulement 14 et les languettes 15 de la douille 13. Ce joint d'étanchéité 20 présente une surface périphérique externe cylindrique en contact avec la douille 13 et une surface périphérique interne comprenant une partie cylindrique 21 prolongée axialement par une partie tronconique 22 qui s'évase vers l'extérieur pour faciliter l'engagement de l'about annelé 2.

Le dispositif de raccordement est complété par une bague de blocage 25 qui présente une gorge interne 26 au fond de laquelle est prévue au moins un orifice traversant 27. Vers une extrémité, la bague 20 présente à sa surface périphérique interne quatre doigts radiaux 28 répartis sur une circonférence de la bague. Deux doigts consécutifs 28 sont reliés l'un à l'autre par une surface 29 de forme hélicoïdale.

On va décrire maintenant le mode de montage d'un tel dispositif de raccordement sur l'embout annelé 2. Concrètement, cette phase de montage est précédée d'une phase d'assemblage du raccord 10 sur l'extrémité 1a du tube de gaz 1 pour arriver à l'état représenté à la figure 1a.

Une douille métallique 30 est rapportée librement sur l'extrémité du tube 1, et l'élément tubulaire 12 de la pièce de liaison 11 du raccord 10 est emmanchée par son extrémité libre dans l'extrémité la du tube 1.

La douille 30 est ensuite sertie en 31 par déformation à froid du métal par action de forces de compression par exemple radiales pour renforcer la solidarisation entre l'élément tubulaire 12 et le tube 1.

Le joint d'étanchéité annulaire 20 est logé à l'intérieur de la douille 13 jusqu'à venir en appui contre l'épaulement interne 14 délimité entre la douille 13 et l'élément tubulaire 12.

Enfin, la bague de blocage 25 est rapportée autour de la douille 13, le bossage 18 de la patte élastiquement déformable 17 de la douille 13 venant se loger dans la gorge 26 de la bague 25, ce qui permet de retenir la douille et la bague assemblées l'une à l'autre. Un raccord 10 est ainsi préassemblé à chaque extrémité du tube gaz 1 pour former un flexible symétrique prêt à être commercialisé.

Pour le montage, le raccord 10 est axialement aligné avec l'embout 2, et on déplace le raccord 10 de manière à faire pénétrer l'extrémité libre de l'embout 2 à l'intérieur de la douille 13 du raccord. Cet engagement nécessite néanmoins d'exercer un effort, car l'extrémité libre de l'embout 2 est en fait engagée à l'intérieur du joint d'étanchéité 20 qui présente un diamètre inférieur, de manière à ce qu'une fois l'embout 2 engagé dans la douille, il y ait étanchéité entre l'embout et la douille 13. Autrement dit, lors de l'engagement de l'embout 2 dans la douille 13, la surface périphérique interne du joint d'étanchéité 20 se déforme pour épouser notamment la forme des ondulations délimitées par les bossages 4 et 5 présents vers l'extrémité libre de l'embout 2.

Ensuite, on entraîne en rotation la bague de blocage 25 pour assurer l'immobilisation axiale du raccord 10 sur l'embout 2.

Avant le mouvement de rotation de la bague de blocage 25 (figure 3, demi-vue 3a), chaque doigt 28 est positionné entre l'extrémité libre d'une languette 15 et la partie de raccordement à la douille 13 de la languette 15 adjacente. Dans ces conditions, la rotation de la bague de blocage 25 ne peut se faire que selon la direction indiquée par la flèche *f*, c'est-à-dire, en direction de l'extrémité libre de la languette 15 adjacente au doigt 28.

Au cours de la rotation de la bague 25 (figure 3, demi-vue 3b), les doigts 28 de la bague 25 prennent respectivement appui sur les extrémités libres des languettes 15 associées de la douille 13. Chaque doigt 28, au fur et à mesure de la rotation de la bague 25, provoque une flexion de la languette 15 associée dont l'amplitude augmente au fur et à mesure que le doigt 28 avance. Ce mouvement de flexion se traduit par une force de pression lorsque la languette 15 vient au contact de l'embout annelé 2. Bien entendu, le mouvement de flexion de chaque languette de serrage 15 varie suivant le diamètre de l'embout 2 engagé dans la douille 13, mais cette flexion doit être toujours suffisante pour que la pression de contact qu'elle exerce sur l'embout 2 assure la tenue mécanique souhaitée, notamment lorsque celui-ci a un diamètre de 12 mm.

Les dimensions du raccord 10 sont telles que la zone de contact entre les languettes 15 et l'embout 2, se situe au voisinage de la gorge 4a délimitée entre la partie cylindrique 3a et le premier bossage annulaire 4 de l'embout 2.

Toujours, au cours de la rotation de la bague de blocage 25, le bossage 18 de la languette de verrouillage 17 qui est guidé dans la gorge 26 de la bague 25 finit par se loger dans l'orifice traversant 27 de la gorge 26. Lorsque cette position est atteinte, cela signifie que le raccord 10 est correctement monté sur l'embout 2.

Bien entendu, l'Invention n'est pas limitée au mode de réalisation précédent, mais comprend tous les moyens techniques équivalents de ceux qui viennent décrits. En particulier, on peut concevoir que les languettes de serrage ne prennent pas directement appui sur l'embout, mais sur le joint d'étanchéité, ceci ayant cependant pour conséquence de réduire sensiblement la tenue à la traction.

**Revendications**

1. Dispositif de raccordement de l'extrémité d'un tube en caoutchouc sur un embout, du type constitué par un raccord comprenant une pièce de liaison formée d'un élément tubulaire (12) destiné à être fixé, par une extrémité à l'extrémité du tube et d'une douille située dans le prolongement axial de l'autre extrémité de l'élément tubulaire et dans laquelle est logé un joint d'étanchéité annulaire, et une bague de blocage mobile en rotation qui est rapportée autour de la douille pour exercer une force de compression radialement interne sur une partie élastiquement déformable de la douille, caractérisé en ce que la partie élastiquement déformable (13a) de la douille (13) est située vers l'extrémité libre de celle-ci, et elle est formée par au moins une languette radiale de serrage arquée (15) qui s'étend sur un arc de circonférence de la douille (13), et en ce que la bague de blocage (25) comporte au moins un doigt radialement interne (28) pour appliquer la languette (15) sur l'embout (2) au cours de la rotation de ladite bague (25).

2. Dispositif de raccordement selon la Revendication 1, caractérisé en ce que chaque languette (15) est globalement délimitée par deux encoches (15a), (15b), une encoche longitudinale (15a), qui délimite la largeur de la languette (15), prolongée sensiblement à 90° par une encoche latérale (15b) qui s'étend sur un arc de cercle de la douille (13).

3. Dispositif de raccordement selon la Revendication 1 ou 2, caractérisé en ce que le doigt interne (28) de la bague de blocage (25), au cours de la rotation de celle-ci, provoque un mouvement de flexion de la languette (15) associée de la douille (13), cette flexion variant selon le diamètre de l'embout (2) utilisé.

4. Dispositif de raccordement selon l'une quelconque des Revendications précédentes, caractérisé en ce que la douille (13) présente au moins une patte de verrouillage longitudinale (17) délimitée entre deux encoches (17a), et terminée à son extrémité par un bossage radial externe (18) qui fait saillie dans une ouverture (27) de la bague (25) après rotation de celle-ci.

5. Dispositif de raccordement selon l'une des Revendications précédentes, caractérisé en ce que le joint d'étanchéité (20) présente, avant mise sous contrainte, une surface périphérique interne comprenant une partie cylindrique (21) prolongée axialement par une partie tronconique (22) qui s'évase vers l'extérieur et dans laquelle vient s'engager l'extrémité libre de l'embout (2).

FIG. 1 a

FIG. 1 b

FIG. 2

FIG. 3

Office européen
des brevets

# RAPPORT DE RECHERCHE EUROPEENNE

Numero de la demande

EP 92 40 1036

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 427 540 (INOVEL S.A.) | 1 | F16L37/10 |
| A | * page 2, colonne 18 - page 3, ligne 18 * | 2,3,5 | F16L33/23 |
| | * page 3, ligne 22 - ligne 24 * | | |
| | * figures 1-4 * | | |
| | --- | | |
| Y | US-A-3 292 956 (SCHIANSKY) | 1 | |
| A | * colonne 3, ligne 53 - ligne 63 * | 2,3 | |
| | * colonne 5, ligne 11 - ligne 16 * | | |
| | * figures 1,2,5,6 * | | |
| | --- | | |
| A | US-A-1 740 574 (CHRISTENSEN) | 1,3,5 | |
| | * le document en entier * | | |
| | --- | | |
| A | FR-A-1 451 383 (GROMELLE) | 1 | |
| | * page 1, ligne 1 - ligne 24 * | | |
| | * page 2, ligne 16 - ligne 31 * | | |
| | * figures 1-3 * | | |
| | --- | | |
| A | US-A-2 695 798 (WHITE) | 1-4 | |
| | * colonne 1, ligne 15 - ligne 25 * | | |
| | * colonne 1, ligne 55 - colonne 2, ligne 36 * | | |
| | * figures 1-4 * | | |

**DOMAINES TECHNIQUES RECHERCHES (Int. Cl.5)**

F16L

-----

Le présent rapport a été établi pour toutes les revendications

| Lieu de la recherche | Date d'achèvement de la recherche | Examinateur |
|---|---|---|
| BERLIN | 17 JUILLET 1992 | RICHARDS T. |